# EUROPEAN PATENT APPLICATION

(11) **EP 1 049 185 A1**
(43) Date of publication of application: **02.11.2000**
(21) Application number: 99303429.7
(22) Date of filing: 30.04.1999
(51) Int. Cl.: H01M 10/16, H01M 2/26, H01M 2/22

(54) **Connecting structure between battery electrode plates and casing**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

An improved combining structure between the battery electrode plates and the battery casing, wherein it is mainly comprised of that the bottoms of the electrode plates are respectively series combined by the series combining straps made of electric conductive or non-conductive materials; and for the improved combining structure between the electrode plates and the battery casing, besides of that the bottoms of the electrode plates can be series combined by the series combining straps, the bottom of the battery casing can be provided with foot slots for inserting the plate connectors, or the inside bottom of the battery casing is installed with the support posts protruding upward to support the electrode plates, or the inside bottom of the battery casing is installed with the series combining straps with slots for inserting the electrode plates; thereby with this composition, not only the positioning effect of the electrode plates can be improved, when the series combining straps are made of electric conductive material, the uniformity of the electric conduction on the electrode plate is also improved, whereby the battery operating life is also extended.

## Description

### BACKGROUND OF THE INVENTION:

### (a) Field of the Invention

An improved combining structure between the battery electrode plates and the battery case, wherein it is particularly related to the improved combining structure between the battery electrode plates and the battery case, whereby it can prolong the operating life of the battery.

### (b) Description of the Prior Art:

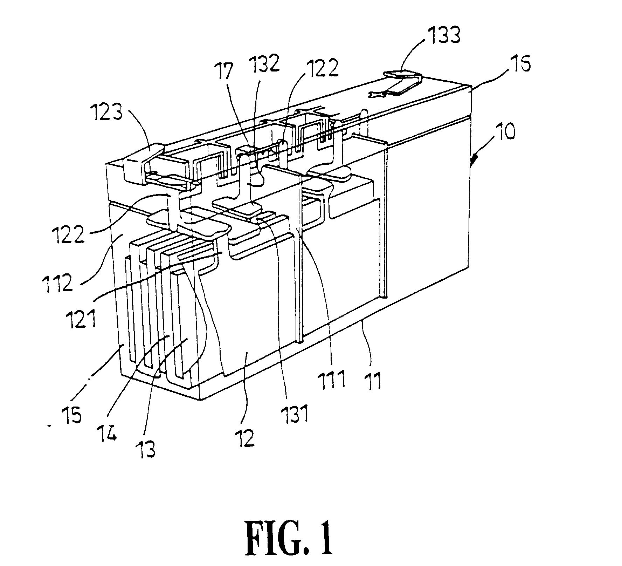

In recent years, applications of batteries become very popular, especially after the births of motorcycles and automobiles, the lead acid battery has become an indispensable component of such vehicles, whereof as shown in Figure 1, the lead acid battery 10 is mainly comprised of the components including a case 11, negative plate group 12, positive plate group 13, separators 14, electrolyte 15 and sealing cover 16, etc.; wherein the inside of the battery case 11 can be divided into several cell compartments 112 through partition plate 111, and each cell compartment 112 is installed with negative plates 12 and positive plates 13 which are made of lead (Pb) and lead bi-oxide (PbO₂) respectively in the battery 10, while the electrolyte 15 is of the diluted sulfuric acid (H₂SO₄) solution, wherein the negative plate 12 and the positive plate 13 is separated by the separator 14 to avoid short-circuit phenomenon from mutual contact. Besides, the plate connectors 121, 123 of the positive and negative plates 12,13 are protruding upward, and the plate connectors 121 of the negative plates 12 are series combined to be the negative terminal post 122, while the plate connectors 13 of the positive plates are series combined to be the positive terminal post 132, in addition, the negative terminal posts 122 and the positive terminal posts 132 in different cell compartments 112 can be further respectively series combined by the cell connectors 17, whereby to respectively provide the electric terminal posts at the top of sealing cover 16, thereby to become the negative terminal post 123 and the positive terminal post 133, hereby as long as the positive electrode wire (not shown in the 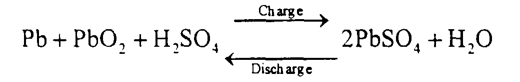 figure ) is connected to the said positive terminal 133 and the negative electrode wire (not shown in the figure) is connected to the said negative terminal 123, the said lead acid battery 10 will provide the electric discharge function, whereof the electric charge/discharge reactions are as follows:

Though the said lead acid battery 10 has the electric charge/discharge functions, the battery case 11 usually appear resonant vibrations in charging/discharging operations, whereby since the negative and positive plates 12,13 in fact are only relied on the series combination of the negative terminal post 122 and the positive terminal post 132 at the top, while no series combination for positioning structure are provided at the bottom, the said negative and positive plates 12,13 have poor integrated positioning effect, hence, when the resonant vibration happens, the said negative and positive plates 12,13 are usually vibrated along at the same time which causes the chemical-active matters either drop off or grow expanded, thereby to damage the charging recoverability of the battery 10 and shorten its operating life.

### SUMMARY OF THE INVENTION

The invention is aimed to provide an improved combining structure between the battery electrode plates and the battery casing, wherein the bottoms of the negative and positive plates are respectively series combined with electric conductive or non-conductive materials; thereof the for the improved combining structure between the battery electrode plates and the battery casing, beside that the bottoms of the electrode plates can be series combined with electric conductive or non-conductive materials, foot slots can also provided at the battery casing bottoms for insertion of the plate connectors; thereby through the aforesaid structural design, better positioning result for electrode plates can be obtained, and when the series combining straps are made of electric conductive material, the uniformity of the electric conduction on the plate can be improved, hence to elongate the battery operating life.

### BRIEF DESCRIPTION OF THE DRAWINGS:

Figure 1 is a schematic diagram of the conventional lead acid battery.

Figure 2 is a sectional schematic diagram of the first better embodying example of the invention illustrating the combination between the battery casing and the first kind of electrode plates.

Figure 3 is a schematic diagram of the invention illustrating the aforesaid first kind of electrode plates.

Figure 4 is a sectional schematic diagram of the said better embodying example of the invention illustrating the combination between the battery casing and the second kinds of electrode plates.

Figure 5 is a schematic diagram of the invention illustrating the aforesaid second kind of electrode plates.

Figure 6 is a sectional schematic of the said better embodying example of the invention illustrating the combination between the battery casing and the third kinds of electrode plates.

Figure 7 is a schematic diagram of the invention illustrating the aforesaid third kind of electrode plates.

Figure 8 is a sectional schematic diagram of another better embodying example of the invention illustrating the combination between the first kind of battery casings and the first kind of electrode plates.

Figure 9 is a sectional schematic diagram of the said another better embodying example of the invention illustrating the combination between the first kind of battery casings and the second kind of electrode plates.

Figure 10 is a sectional schematic diagram of the said another better embodying example of the invention illustrating the combination between the first kind of battery casings and the third kind of electrode plates.

Figure 11 is a sectional schematic diagram of the said another better embodying example of the invention illustrating the combination between the first kind of battery casing foot slots and the electrode plates.

Figure 12 is a sectional schematic diagram of the said another better embodying example of the invention illustrating the combination between the second kind of battery casings and the first kind of electrode plates.

Figure 13 is a sectional schematic diagram of the said another better embodying example of the invention illustrating the combination between the second kind of battery casings and the second kind of electrode plates.

Figure 14 is a sectional schematic diagram of the said another better embodying example of the invention illustrating the combination between the second kind of battery casings and the third kind of electrode plates.

Figure 15 is a sectional schematic diagram of the said another better embodying example of the invention illustrating the combination between the fourth kind of battery casings and the electrode plates.

Figure 16 is a sectional schematic diagram of the said another better embodying example of the invention illustrating the combination between the fifth kind of battery casings and the electrode plates.

Figure 17 is a sectional schematic diagram of the said another better embodying example of the invention illustrating the combination between the sixth kind of battery casings and the electrode plates.

Figure 18 is a schematic diagram of the said another better embodying example of the invention illustrating the terminal connections of a single cell compartment.

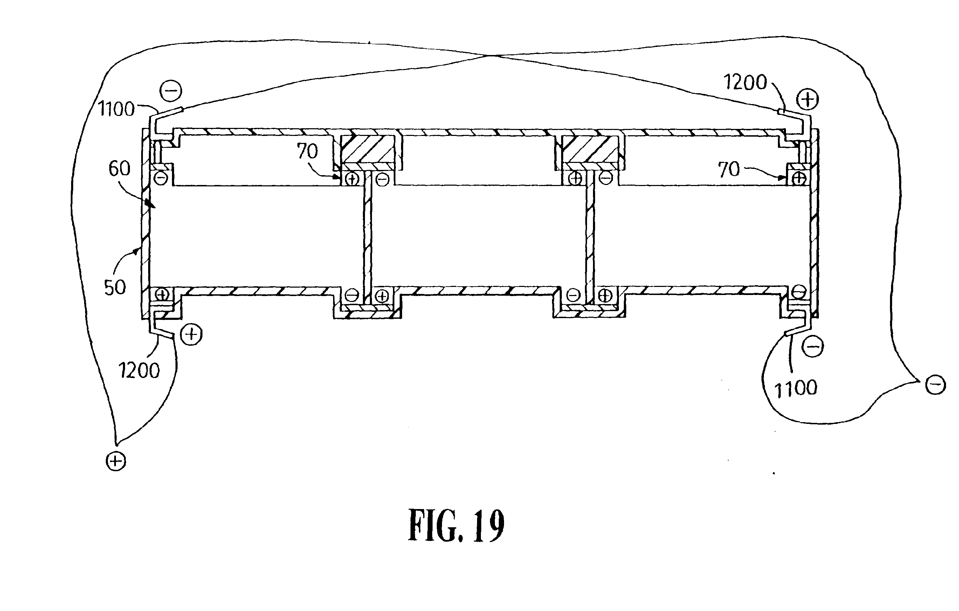

Figure 19 is a schematic diagram of the said another better embodying example of the invention illustrating the multiple cells terminal connections.

### DETAILED DESCRIPTION OF THE PREFERRED EMOBODIMENTS

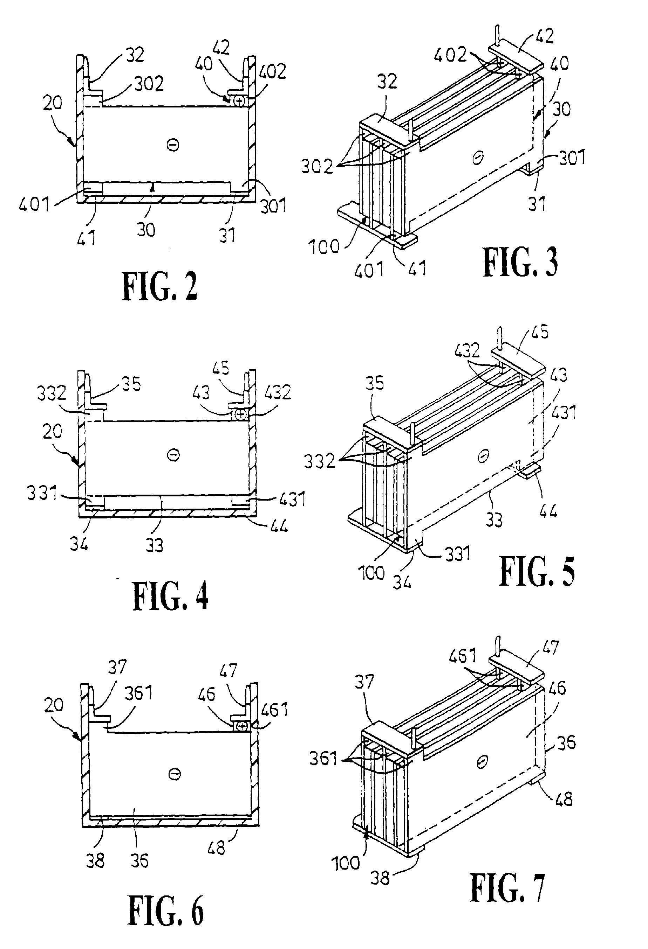

As shown in figure 2, the improved combing structure of the first better embodying example of the invention is mainly comprised of a battery casing 20, and the electrode plates which is comprised of at least two negative plates 30, and at least one positive plate 40 (the embodying example includes four negative plates and three positive plates); wherein the said negative and positive plates 30, 40 are installed within the battery casing 20; wherein the said battery casing 20 is the same as the conventional type to be a top opened hollow rectangular casing, thereof the said negative and positive plates 30, 40 are intercross arranged and are mutually separated by the separators 100 to avoid short circuit due to mutual contact, wherein it is characterized in that: As shown in Figure 3, the bottoms of the negative and positive plates 30,40 are respectively series combined by the negative electrode combining strap 31, and the positive electrode combining strap 41 made of either conductive material (such as lead, lead alloy,... etc.) or non-conductive material (such as anti-corrosive plastics,.., etc.), thereby, the bottoms of the said negative and positive plates 30,40 can be positioned, and the integrated positioning effects of the said negative and positive plates 30, 40 are improved, therein for the structure design of the said negative and positive plates 30, 40, it is as shown in figure 2 and 3, the two plate connectors 301, 302, 401, 402 are respectively symmetrically formed at the two diagonal corner of the said negative and positive plates 30, 40, which cause the said negative and positive plates 30, 40 appear " 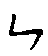 " shape structure, whereby the negative and positive plates 30, 40 in the mentioned shapes can be through their bottom plate connectors 301, 401 to be respective welded with the negative and positive electrode combining straps 31, 32, while their top plate connectors 302,402 can be series combined to be the negative terminal post 32 and positive terminal post 42.

For the other structural shape designs of the said negative and positive plates, it is as shown in figures 4, 5, wherein the said negative and positive plates 33, 43 also have the bottom and top plate connectors 331, 332, 431, 432, but the said plate connectors are formed at the top and bottom ends of one sides of the negative and positive plates 33, 43, which cause the said negative and positive plates 33, 43 appear a "T" shape structure, and similarly their bottom plate connectors 331, 431 are respectively welded with the negative and positive electrode combining straps 34, 44 made of electric conductive and non-conductive materials, while the top plate connectors 332,432 are series combined to be th negative terminal post 35 and positive terminal post 45.

In addition, as shown in figures 6, 7, there are another kind of structural designs for the negative and positive plates 36, 46, wherein each of them has only one plate connector 361, 461 respectively, thereof the said plate connectors 361, 461 are protruding upward, whereby they can be series combined to be the negative terminal post 37 and the positive terminal post 47, further, the bottoms of the said negative and positive plates 36, 46 can be respectively welded with negative and positive electrodes combining straps 38, 48 made of electric conductive or non-conductive materials to improve the positioning effects.

It is worth mentioned that when the negative electrodes combining straps 31, 34, 38 and the positive electrode combining straps 41,44,48 are mad of non-conductive material, the integrated positioning effects of the negative and positive plates 30, 33, 36, 40, 43, 46 are improved, thereby to avoid generation of resonant vibrations during the electric charging/discharging process which cause drop off or expanded growth of the chemical-active matters, and to further prolong the battery operating life; while when the negative electrodes combining straps 31,34,38 and positive electrode combining straps 41,44,48 are made of conductive material, besides of that the positioning effect of the aforesaid negative and positive plates are improved, better uniformity of electric conduction on the aforesaid negative and positive plates are obtained, thereby the internal resistance of the aforesaid negative and positive plates can be reduced, and the battery discharge capacity is increased.

Regarding the series combination methods, the positive electrode combining straps 41, 44, 48 are series combined at the bottoms of the positive plates 40,43,46 while the bottoms of the negative plates 30, 33, 36 are not series combined, or the negative and positive electrode combining straps 31,34,38,41,44,48 are respectively series combined with the bottoms of the negative and positive plates 30,33,36,40,43,46; or the negative electrode combining straps 31, 34, 38 are series combined at the bottoms of the negative plates 30,33,36 while the bottoms of the positive plates 40,43,46 are not series combined.

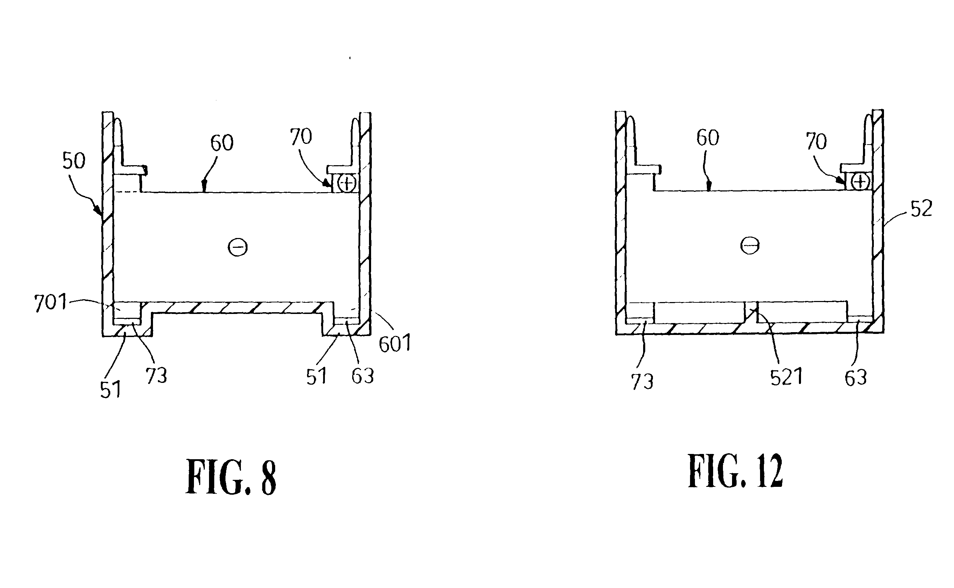

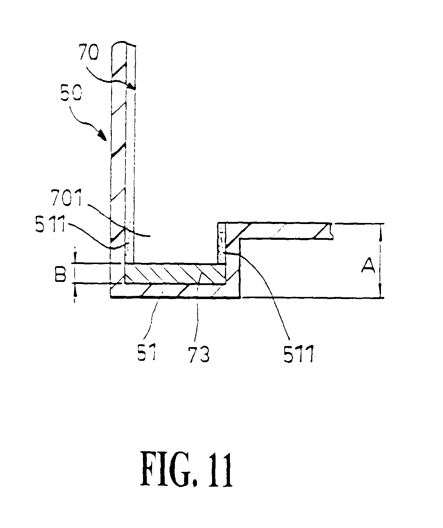

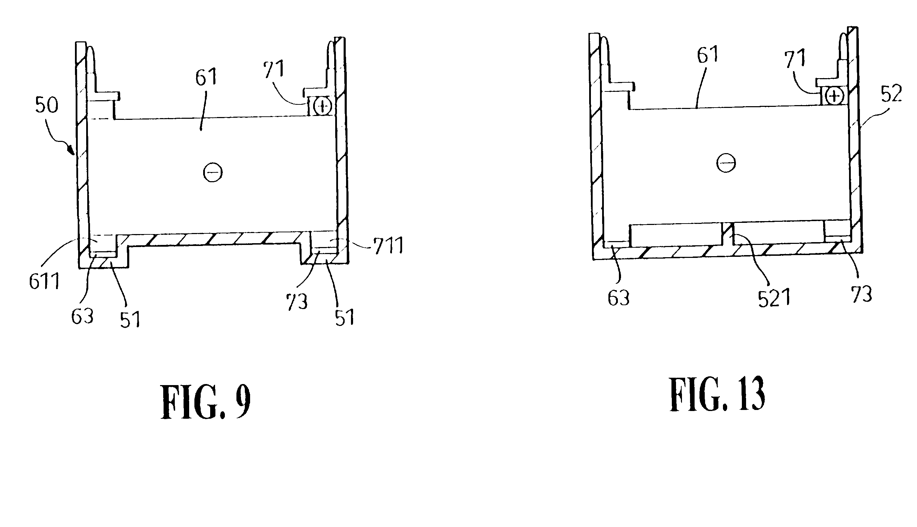

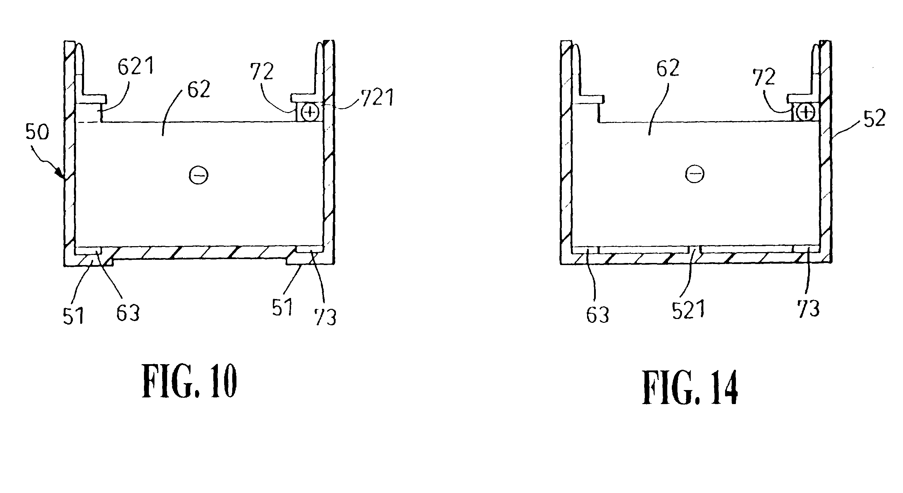

The second better embodying example of the invention on the improved combining structure between the electrode plates and the battery casing is referred to figures 8, 9, 10, wherein it is mainly comprised of that the each bottom of the two sides of the battery casing 50 is installed with a foot slot 51, while the structural designs of the negative and positive plates 60, 70 are the same as in the aforesaid embodying examples, i.e. it also includes three types of structure designs of the negative and positive plates 60, 70, 61, 71, 62, 72, whereof their bottoms are also respectively series welded combined with the negative electrodes combining strap 63 and the positive electrodes combining strap 73 made of electric conductive or non-conductive materials, thus through the design of the foot slots 51 of the said battery casing 50, the bottom plate connectors 601, 611, 701, 711 of the negative and positive plates 60,61,70,71 and the negative and positive electrode series combining straps 63,73 are inserted in the said foot slots 51, thereby the bottoms of the negative and positive plates 60, 61, 70, 71 are combined with the battery casing 50 to improve the positioning effect; therein for the negative and positive plates 62,72 which have only single plate connectors 621, 721, the bottom negative and positive electrode series combining straps 63, 73 can be inserted in the foot slots 51, and similarly the positioning effects of the said negative and positive plates 62,72 can be improved; thereof it is as shown in figure 11, regarding the optimum condition for the bottom plate connectors 601,611,701,711 of the said negative and positive plates 60,61,70,71 inserting in the foot slots 51 of the battery casing 50 ( This figure only shows the case of that the bottom plate connector 701 of the positive plate 70 is inserted into the foot slot 51 for illustration) is that: the foot slot height "A" shall be more than 7 mm, the welding depth B of the positive electrode combining strap 73 is 2~3 mm, thereof when the insertion is done, the said foot slot 51 is filled with epoxy resin or acid solution, wherein the epoxy resin is filled in the space 511 between the foot slot 51 and the plate connector 701 to avoid acid drop off from the positive plate 70, thereby to eliminate the possibility of lack-acid on the plate, while the filled-up acid solution maintains the adequate "acid remains" between the battery casing 50 and the electrode plates whereby to have a good charging recoverability and to prolong the battery operating life.

As are further shown in figures 12,13,14, the battery casing 52 is of another different structural design, wherein the bottom of the said battery casing 52 is installed with a protruding support post 521, hence when the negative and positive plates 60,61,62,70,71,72 are respectively installed into the said battery casing 52, the said support post 521 can support the bottoms of the said negative and positive plates, whereby the positioning effects of the said negative and positive plates can be improved, and the battery operating life is elongated.

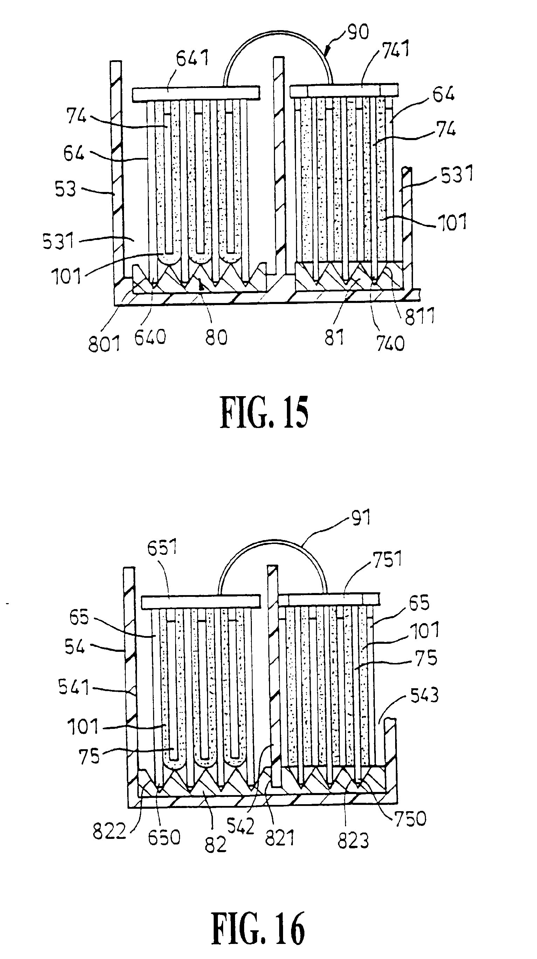

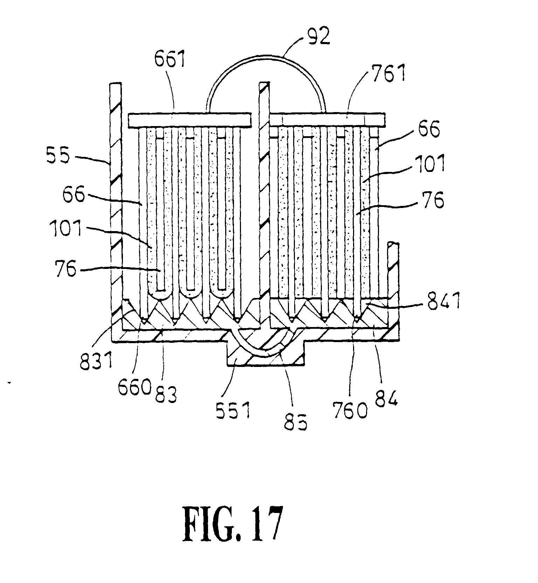

Besides, as is further shown in figure 15 which is a schematic diagram of another battery casing 53 and the negative and positive plates 64,74, wherein it is mainly comprised of that the bottom of each cell compartment 531 of the battery casing 53 is installed with negative and positive electrode combining straps 80,81 and several "V" shape slots 801, 811 are provided on them for insertion of the plate connectors 640, 740 at the bottom of the negative and positive plates 64,74, further, the said negative and positive plates 64, 74 are also separated by the separators 101, wherein the said negative and positive electrode combining straps 80,81 are made of electric conductive or non-conductive materials, and they can be independently inserted into the battery casing 53, or can be integrated manufactured by plastic injection methods with the battery casing 53; in addition, the negative and positive terminal posts 641, 741 on the tops of the negative and positive plates 64,74 in different cell compartments 531 are series combined with an electric conducting foil 90 for passing electric current; therein as is further shown in figure 16, the series combining strap 81 is first installed at the bottom of the large cell compartment 541 in another battery casing 54, whereof the middle of the series combining strap 82 is provided with an insert slot 821 for insertion of a separator 542, and the said large cell compartment 541 is divided into two smaller cell compartments 543; furthermore, two sides of the middle insert slot 821 of the series combining strap 82 are further installed with several insert slots 822, 823 for insertions of the bottom plate connectors 650, 750 of the negative and positive plates 65, 75, whereof the said series combining strap 82 is made of conductive material and has the effect of series combining the negative and positive plates 65,75; and of course, the negative and positive terminal posts 651, 751 at the tops of the negative and positive plates 65,75 are also series combined with an electric conducting foil 91; at the last, as is further shown in figure 17, to allow for electric conduction between the two independent separated negative and positive series combining straps 83, 84, the bottom of the battery casing 55 can be installed with a slot 551 for introducing the electric conducting foil 85, and through it to combine with the said negative and positive series combining straps 83, 84, in addition, the said series combining straps 83, 84 are also respectively installed with slots 831, 841 for insertions of the bottom plate connectors 660, 760 of the negative and positive plates 66, 76, and of course, the respective top plate connectors 661, 761 of the negative and positive plates 66, 76 are also series combined with an electric conducting foil 92.

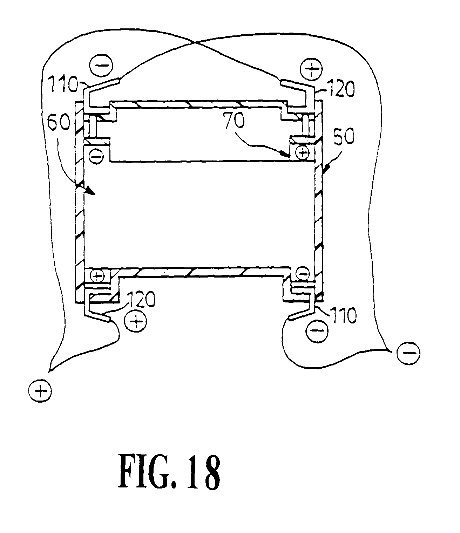

Lastly, it is further shown in figure 18 that for a single cell battery, the tops and bottoms of the negative and positive plates 60, 70 of the said battery casing 50 are extended to provide power output terminals 110, 120, and the extended terminals 110, 120 at the tops and bottoms of the electrode plates 60, 70 in the same polarity all appear positive to positive, negative to negative combination to supply power; while for the battery of multiple cells, the polarities of the negative and positive plates 60, 70 between the cells are mutually series combined, and the top and bottom terminal posts of the said negative and positive electrode plates 60, 70 are all extended to provide a pair of positive and negative power output terminals 1100, 1200, whereof the two terminals 1100,1200 appear positive to positive, negative to negative combination to supply power, wherein the electricity is introduced at the same time, whereby to reduce the internal resistance of the electrode plates.

The achievable effects and advantages of the invention on "the improved combining structure between the battery electrode plates and the battery case" are further described as following:
1. Regarding the improved structures of the battery electrode plates
   1) In the invention, the bottoms of the negative and positive plates 30, 33, 36, 40, 43, 46 are respectively series combined through series combining straps 31, 34, 38, 41, 44, 48 made of non-conductive or conductive materials, thereby the bottoms of the aforesaid plates are positioned, and the integrated positioning effect of the said electrode plates is improved and the resonant vibrations can be further avoided to reduce the drop-offs of the chemical-active matters or expanded growth which result in the effectiveness and advantages of prolonging the batteries operating life of .
   2) When the series combining straps 31, 34, 38, 41, 44, 48 are made of electric conductive material, besides of that the electrode plates positioning effect can be improved, the electric conducting uniformity on the said electrode plates becomes better, thus not only the internal resistance of the aforesaid electrode plates can be reduced, the effect and advantage of increasing the battery discharge capacity are also obtained.
2. Regarding the improved combining structure between the battery electrode plates and the battery casing:
   1) In the invention, besides of that the bottoms of the negative and positive plates are respectively series combined through the series combining straps to improve the integrated positioning effects, the bottom side of the battery casing 50 can be also installed with foot slots 51 for inserting the plate connectors 601, 611, 701, 711 of the negative and positive plates 60, 61, 70, 71 and the series combing straps 63, 67, to further improve the bottom positioning effect of the said negative and positive plates 60, 61, 62, 70, 71, 72; furthermore, the foot slots 51 can be filled in with epoxy resin or acid solution to maintain adequate "acid remains" in the battery casing 50, thereby to nave the effect and advantage of maintaining good charging recoverability of the battery.
   2) In the invention, the bottom of the battery casing 52 can also installed with a protruding support post 521 to support the aforesaid negative and positive plates thereby to improve the positioning effect of the aforesaid electrode plates and to prolong the operating life of the battery.
   3) When the series combining straps 63, 73 are made of electric conductive material, besides of that the positioning effect of the negative and positive plates 60, 61, 62, 70, 71, 72 are improved, the internal resistance of the aforesaid electrode plates can be also reduced, furthermore, the effect and advantage of increasing the battery discharging capacity are obtained.
   4) In the invention, the bottoms of the battery casings 53, 54,55 can be directly series combined with the series combining straps 80, 81, 82, 83, and the inserting slots 801, 811, 822, 823, 833, 834 can be further installed on the said series combining straps for insertions of the negative and positive plates 64, 74, 65, 75, 66, 76, thereby the positioning effect of the aforesaid electrode plates can be improved, and the effect and advantage of increasing the battery operating life are obtained.
   5) When the series combining straps 80, 81, 82, 83 are made of electric conductive material, besides of that the positioning effect of the negative and positive plates 64, 74, 65, 75, 66, 76 are improved, the internal resistance of the aforesaid electrode plates is also reduced, whereby to obtain the effect and advantage of increasing the battery discharging capacity.

The above disclosed illustrations are only the two better embodying examples of the invention, therefore, any equivalent modifications or changes following within the spirit range of the invention proposed by any personnel who is familiar with the art of the invention shall be included in the range of the patent application for the invention.

## Claims

1. An improved structures of the battery electrode plates, wherein it is comprised of at least a positive plate, and at least two negative plates to consitute the negative and positive electrode plate groups, whereof the bottoms of the said plates are series combined by the series combining straps made of non-conductive material to provide bottom positioning of the said plates.

2. The improved structure on the battery electrode plates as in claim 1, wherein the bottoms of the electrode plates are series combined by the series combining straps made of electric conductive material, whereby to provide bottom of plate positioning and to promote the uniformity of the electric conduction on the electrode plates.

3. The improved structure on the battery electrode plates as in claims 1 or 2, wherein it can be selected that the bottoms of the positive plates are series combined while the bottoms of the negative plates are not series combined.

4. The improved structure on the battery electrode plates as in claims 1 or 2, wherein it can be selected that the bottoms of the positive plates and the bottoms of the negative plates are all series combined.

5. The improved structure on the battery electrode plates as in claims 1 or 2, wherein it can be selected that the bottoms of the negative plates are series combined while the bottoms of the positive plates are not series combined.

6. An improved combining structure between a kind of battery electrode plates and the battery casing, wherein it is characterized in: the bottoms of the said negative and positive plates are positioned at the bottom of the battery casing.

7. The improved combining structure between the battery electrode plates and the battery casing as in claim 6, wherein the bottoms of the said negative and positive plates can be series combined by the electric conductive or non-conductive materials.

8. The improved combining structure between the battery electrode plates and the battery casing as in claim 6, wherein the bottom of the said battery casing is installed with at least one foot slot for insertion of the bottom plate connector of the electrode plate.

9. The improved combining structure between the battery electrode plates and the battery casing as in claim 6, wherein the bottom of the said battery casing is installed with a support post protruding upward to support the electrode plate for positioning.

10. The improved combining structure between the battery electrode plates and the battery casing as in claim 6, wherein the bottom of the said battery casing can be an integrated structure of electric conductive or non-conductive material.

11. The improved combining structure between the battery electrode plates and the battery casing as in claim 8, wherein the foot slots are filled in with epoxy resin or acid solution to fill the space between the slots and the plate connector, whereby the filled-up epoxy resin can prevent acid drop-off from the electrode plate, while filled-up acid solution can maintain the adequate "acid remains" between the battery casing and the electrode plate, thereby to have a better charging recoverability.

12. The improved combining structure between the battery electrode plates and the battery casing as in claims 1 or 6, wherein plate connectors can be in pairs to be formed at two diagonal corners of the electrode plate.

13. The improved combining structure between the battery electrode plates and the battery casing as in claims 1 or 6, wherein plate connectors can be in pairs to be formed at the top and bottom of the electrode plate at the same side.

14. The improved combining structure between the battery electrode plates and the battery casing as in claims 1 or 6, wherein the electrode plate can have only one plate connector.

15. The improved combining structure between the battery electrode plates and the battery casing as in claims 1 or 6, wherein for a single cell compartment battery, the top and bottom of the said negative and positive plates can ce installed with extended power output terminals, and the top and bottom power output terminal of the electrode plates of the same polarities are in positive to positive, negative to negative combination to supply power.

16. The improved combining structure between in battery electrode plates and the battery casing as in claim 6, wherein for the battery of multiple cell compartments, the negative and positive polarities between the cell compartments are mutually series combined, whereof the tops and bottoms of the said negative and positive plates are all installed with extended a pair of positive and negative power output terminals, while the pairs of power output terminals are in positive to positive and negative to negative combinations to supply power.

17. An improved combining structure between the battery electrode plates and the battery casing, wherein it is mainly comprised of that the bottoms of the electrode plates are respectively series combined by the series combining straps made of electric conductive or non-conductive materials; and for the improved combining structure between the electrode plates and the battery casing, besides of that the bottoms of the electrode plates can be series combined by the series combining straps, the bottom of the battery casing can be provided with foot slots for inserting the plate connectors, or the inside bottom of the battery casing is installed with the support posts protruding upward to support the electrode plates, or the inside bottom of the battery casing is installed with the series combining straps with slots for inserting the electrode plates; thereby with this composition, not only the positioning effect of the electrode plates can be improved, when the series combining straps are made of electric conductive material, the uniformity of the electric conduction on' the electrode plate is also improved, whereby the battery operating life is also extended.
